Europäisches Patentamt

European Patent Office

Office européen des brevets

(19)

(11) Numéro de publication : **0 314 588 B1**

(12) **FASCICULE DE BREVET EUROPÉEN**

(45) Date de publication du fascicule du brevet :
**18.12.91 Bulletin 91/51**

(51) Int. Cl.⁵ : **C09D 5/29**

(21) Numéro de dépôt : **88420368.8**

(22) Date de dépôt : **27.10.88**

(54) **Composition multicolore pour revêtement mural.**

(30) Priorité : **28.10.87 FR 8715323**

(43) Date de publication de la demande :
**03.05.89 Bulletin 89/18**

(45) Mention de la délivrance du brevet :
**18.12.91 Bulletin 91/51**

(84) Etats contractants désignés :
**AT BE CH DE ES FR GB GR IT LI LU NL SE**

(56) Documents cités :
**EP-A- 0 193 301**
**BE-A- 632 043**
**US-A- 3 821 155**

(73) Titulaire : **Laurent, Alain**
**40, rue du Vieux Port**
**F-69540 Irigny (FR)**

(72) Inventeur : **Laurent, Alain**
**40, rue du Vieux Port**
**F-69540 Irigny (FR)**

(74) Mandataire : **Maureau, Philippe et al**
**Cabinet GERMAIN & MAUREAU BP 3011**
**F-69392 Lyon Cédex 03 (FR)**

## Description

La présente invention a pour objet une composition multicolore pour revêtement mural, destinée à être appliquée par projection, ou à l'aide d'un rouleau en une opération.

Il existe différents types de revêtements muraux : peintures, papiers peints, ou revêtements projetés sous une épaisseur plus importante qu'une peinture, et auxquels il est possible de donner un relief à l'aide d'une spatule ou d'un rouleau alvéolé. Si ces derniers revêtements sont appréciés en raison de leur caractère décoratif, ils présentent, néanmoins, l'inconvénient de n'être que d'une seule couleur, généralement blanche, ce qui limite les effets décoratifs susceptibles d'être obtenus.

Il existe également des revêtements dont l'aspect décoratif est caractérisé par la présence de grains colorés, qui sont des grains de sable colorés soit naturellement, soit artificiellement. Ces grains sont enrobés dans un liant de type latex et déposés sur un support tel qu'un mur, à l'aide d'une taloche. Outre le fait que ce mode d'application est long et fastidieux, il est toujours procédé au dépôt d'une quantité importante de sables colorés au mètre carré, du fait de la granulométrie grossière des sables et du fait que le support doit être entièrement recouvert. C'est ainsi que le poids au mètre carré déposé peut aller, selon les granulométries de 2 à plus de 8 kg/m².

Une autre solution pour obtenir un revêtement comportant des particules colorées consiste à appliquer une couche de fond sur un support, puis à projeter par soufflage sur cette couche de fond encore humide des paillettes multicolores sèches, et enfin à appliquer une couche de vernis. Ce procédé est extrêmement fastidieux de mise en oeuvre puisqu'une proportion importante de paillettes, au moins la moitié, tombées sur le sol, doivent être récupérées et projetées à nouveau, avec les risques qu'il y a de voir ces paillettes chargées d'impuretés. De plus, un brossage complémentaire du mur doit être effectué avant passage du vernis.

Dans l'un et l'autre cas, il s'agit de techniques longues et difficiles à mettre en oeuvre, ne permettant le recouvrement, en une seule opération, que de petites surfaces.

La présente invention vise à remédier à ces inconvénients.

A cet effet, la composition qu'elle concerne contient, en combinaison, des charges minérales colorées se présentant sous forme de granulés et des fibres en dispersion dans l'eau qui, après séchage, sont transparentes ou translucides.

La composition se présente à l'origine sous forme d'une pâte visqueuse, dont la viscosité est réglée en fonction des proportions d'eau qu'elle contient, dans laquelle sont uniformément réparties les charges minérales. Cette composition est projetable, par exemple à l'aide d'une machine sur un support. Il est à noter que les fibres enrobent et agglomèrent les granulés, ce qui facilite la projection de la composition, et empêchent le rebond des granulés sur le support à décorer. En fait, les fibres forment une sorte de réseau maintenant les granulés plaqués sur le support. Il a été découvert de façon surprenante qu'en utilisant des fibres transparentes ou translucides après séchage, les granulés demeuraient parfaitement visibles sans ternir l'effet multicolore recherché, bien que les granulés soient au moins partiellement recouverts par des fibres.

Il est ainsi possible d'obtenir simplement et rapidement un revêtement mural à grains colorés en mettant en oeuvre une quantité de granulés bien inférieure à celle présente dans un revêtement taloché.

Selon une première forme de réalisation, cette composition contient des fibres de cellulose.

Selon une autre forme de réalisation, cette composition contient des fibres de matière synthétique, choisies parmi les polyoléfines et polyamides, en dispersion dans l'eau.

En outre, cette composition contient un liant soluble à l'eau, tel qu'un éther cellulosique.

Cette solution est intéressante, d'une part, en permettant l'obtention d'une pâte consistante qui évite la sédimentation des granulés et, d'autre part, en offrant la possibilité, par réhumidification du revêtement, de retirer celui-ci à la façon d'un papier peint.

Selon une possibilité, cette composition contient les éléments suivants :

| | |
|---|---|
| Fibres de cellulose de 0,1 à 3 mm de longueur | 5 |
| Ether cellulosique | 1 |
| Grains de quartz coloré (1) de 0,1 à 2 mm de diamètre | 5 |
| Grains de quartz coloré (2) de 0,1 à 2 mm de diamètre | 5 |
| Eau | 83,9 |
| Agents bactéricides et fongicides | 0,1 |
| | 100 |

Dans la formule indiquée ci-dessus, la composition comprend deux types de granulés, par exemple de couleurs différentes.

De multiples mélanges de grains de quartz colorés sont possibles, soit selon leur granulomètrie, soit selon leurs couleurs, soit selon ces deux critères ensemble.

Selon un mode de mise en oeuvre particulièrement économique, il est possible d'appliquer tout d'abord sur le support une sous-couche de produit opaque et, éventuellement, teinté dans la masse, puis de projeter sur celle-ci une couche de la composition selon l'invention. Il est ainsi possible de limiter l'épaisseur de la seconde couche qui laisse alors apparaître entre les granulés la surface de la première couche. En fonction des coloris des granulés, de leur taille et des teintes de la première couche, il est possible d'obtenir un nombre extrêmement important de combinaisons, correspondant chacune à un décor particulier.

Dans la mesure où cette composition est destinée à être appliquée au rouleau en une seule opération, elle contient en outre un polymère en dispersion aqueuse.

## Revendications

1. Composition multicolore pour revêtement mural, caractérisée en ce qu'elle contient, en combinaison, des charges minérales colorées se présentant sous forme de granulés et des fibres en dispersion dans l'eau qui, après séchage, sont transparentes ou translucides.

2. Composition selon la revendication 1, caractérisée en ce qu'elle contient des fibres de cellulose.

3. Composition selon la revendication 1, caractérisée en ce qu'elle contient des fibres de matière synthétique, choisies parmi les polyoléfines et polyamides, en dispersion dans l'eau.

4. Composition selon l'une quelconque des revendications 1 et 3, caractérisée en ce qu'elle contient un liant soluble à l'eau, tel qu'un éther cellulosique.

5. Composition selon la revendication 4, caractérisée en ce qu'elle contient les éléments suivants :

| | |
|---|---|
| Fibres de cellulose de 0,1 à 3 mm de longueur | 5 |
| Ether cellulosique | 1 |
| Grains de quartz coloré (1) de 0,1 à 2 mm de diamètre | 5 |
| Grains de quartz coloré (2) de 0,1 à 2 mm de diamètre | 5 |
| Eau | 83,9 |
| Agents bactéricides et fongicides | 0,1 |
| | 100. |

6. Composition selon l'une quelconque des revendications 1 à 5, caractérisée en ce qu'elle contient, en outre, un polymère en dispersion aqueuse.

## Patentansprüche

1. Vielfarbige Zusammensetzung für Wandbeschichtungen, **dadurch gekennzeichnet**, daß sie in Mischung gefärbte mineralische Füllstoffe, die in Form von Granulat vorhanden sind, und in Wasser dispergierte Fasern enthält, die nach Trocknung durchsichtig oder durchscheinend sind.

2. Zusammensetzung nach Anspruch 1, **dadurch gekennzeichnet**, daß sie Cellulosefasern enthält.

3. Zusammensetzung nach Anspruch 1, **dadurch gekennzeichnet**, daß sie Fasern aus synthetischem Material, ausgewählt aus Polyolefinen und Polyamiden, dispergiert in Wasser enthält.

4. Zusammensetzung nach einem der Ansprüche 1 bis 3, **dadurch gekennzeichnet**, daß sie ein in Wasser lösliches Bindemittel wie etwa einen Celluloseether enthält.

5. Zusammensetzung nach Anspruch 4, **dadurch gekennzeichnet**, daß sie die folgenden Bestandteile enthält :

| | |
|---|---|
| Cellulosefasern mit 0,1 bis 3 mm Länge | 5 |
| Celluloseether | 1 |
| Körner eines farbigen Quarzes (1) mit 0,1 bis 2 mm Durchmesser | 5 |
| Körner eines farbigen Quarzes (2) mit 0,1 bis 2 mm Durchmesser | 5 |
| Wasser | 83,9 |
| Bakterizide und fungizide Mittel | 0,1 |
| | 100 |

6. Zusammensetzung nach einem der Ansprüche 1 bis 5, **dadurch gekennzeichnet**, daß sie außerdem ein Polymer in wässriger Dispersion enthält.

## Claims

1. Multicoloured composition for wall coatings, characterised in that it contains a combination of coloured mineral charges in the form of granulates and fibres dispersed in water which, after drying, are transparent or translucid.

2. Composition according to claim 1, characterised in that it contains cellulose fibres.

3. Composition according to claim 1, characterised in that it contains synthetic material fibres, selected from the group containing polyolefins and polyamides, dispersed in water.

4. Composition according to any one of claims 1 to 3, characterised in that it contains a watersoluble binder, such as a cellulose ether.

5. Composition according to claim 4, characterised in that it comprises the following components :

| | |
|---|---|
| cellulose fibres 0.1 to 3 mm long | 5 |
| cellulose ether | 1 |
| grains of coloured quartz (1) between 0.1 and 2 mm in diameter | 5 |
| grains of coloured quartz (2) between 0.1 and 2 mm in diameter | 5 |
| water | 83.9 |
| bactericidal and fungicidal agents | 0.1 |
| | 100 |

6. Composition according to any one of claims 1 to 5, characterised in that it further contains a polymer in aqueous dispersion.